# EUROPEAN PATENT APPLICATION

(11) **EP 1 286 292 A2**
(43) Date of publication of application: **26.02.2003**
(21) Application number: 02018480.0
(22) Date of filing: 16.08.2002
(51) Int. Cl.: G06F 17/60

(54) **Method and system for data distribution**

(30) Priority: 21.08.2001 JP 2001250067
(71) Applicant: MATSUSHITA ELECTRIC INDUSTRIAL CO., LTD., Kadoma-shi, Osaka 571-8501 (JP)
(72) Inventor: Murakami, Yuko, Saijo-shi, Ehime 793-0030 (JP); Takahashi, Kazunori, Saijo-shi, Ehime 793-0043 (JP)
(74) Representative: Balsters, Robert

(57) **Abstract**

The present invention provides a data distribution system which enables to enter data in a server by using e-mails, as well as inform a person with whom the data are to be shared, of entry position information corresponding to the entered data. This data distribution system enters a file that is attached to e-mail by a client, in a common server, creates a URL indicating the entry position, and transmits an e-mail including a message with the URL from the common server to a predetermined client. According to the present invention, the entry position can be informed the person who views the data by using the e-mail, at the same time of the data entry into the server. Accordingly, the transmitter can enter the data when being in environments in which he/she can transmit e-mails, and the receiver can view the data when being in environments in which he/she can view a Web server.

## Description

### FIELD OF THE INVENTION

The present invention relates to a data distribution method and a data distribution system.

### BACKGROUND OF THE INVENTION

Conventionally, when data are transferred from a client on a transmitting end to a client on a receiving end, a method is widely employed in which an electronic mail (hereinafter, referred to also as e-mail) is transmitted with a file attached thereto. However, according to this method, when the attached file is data including pictures or sounds, the amount of data is quite large, thereby causing numerous inconveniences. More specifically, when a memory capacity of a terminal that is used by the client on the receiving end to receive e-mails is insufficient, the attached data cannot be received. In addition, when the transfer rate is low, it takes a long time to receive all information, whereby e-mails from others cannot be received or communication with others cannot be established during this time.

To solve these problems, a method is conceivable in which e-mail including an attached file is transmitted from the client on the transmitting end to a common server and temporarily stored at a predetermined entry position in the common server, and the client on the receiving end reads the attached file which has been stored at the predetermined entry position in the common server.

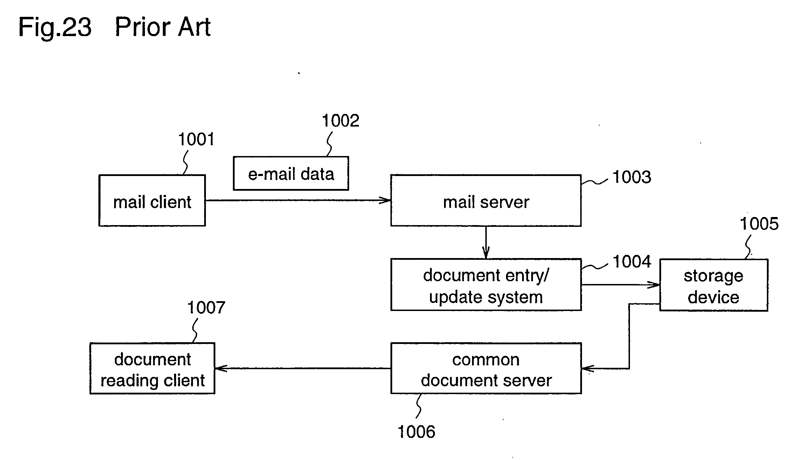

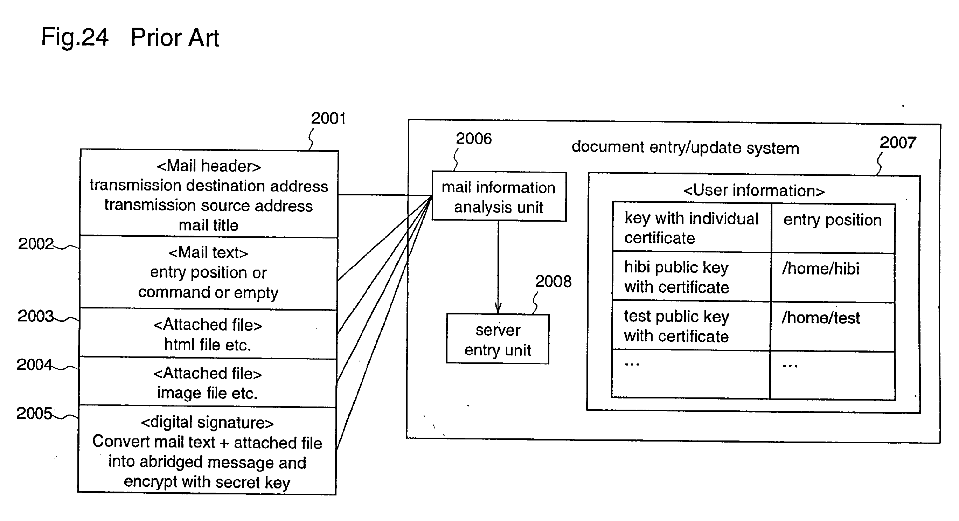

Japanese Published Patent Application No. 2000-215123 discloses an example of the technique for entering e-mails including attached files in a server. Hereinafter, this conventional technique disclosed in this application will be described with reference to Figs. 23 and 24.

Fig. 23 is a block diagram illustrating a document entry/update system construction in a common document management device according to this prior art.

In Fig. 23, a mail client 1001 transmits an e-mail for a document entry/update system 1004 with attaching thereto a document which is to be shared. The transmitted e-mail data 1002 including the attached file is transmitted to the document entry/update system 1004 via a mail server 1003. The document entry/update system 1004 recognizes a user that is indicated by a mail address of the transmission source, and enters the file attached to the e-mail at a predetermined entry position in a storage device 1005. A document reading client 1007 accesses the storage device 1005 via a common document server 1006, and reads the attached file stored in the storage device 1005.

Fig. 24 is a block diagram illustrating a structure of the document entry/update system 1004 according to the prior art. The storage of the file attached to the e-mail is carried out as followed.

In Fig. 24, numerals 2001 to 2005 denote contents of e-mail that is transmitted from the mail client 1001. The e-mail comprises a mail header 2001, a mail text 2002, attached files 2003 and 2004, and a digital signature 2005. The document entry/update system 1004 comprises a mail information analysis unit 2006 that analyzes contents of received e-mails, a user information database 2007 that holds information of users, and a server entry unit 2008 that enters files attached to e-mails in the storage device 1005.

The e-mail that is transmitted to the document entry/update system 1004 is first received by the mail information analysis unit 2006, and then the mail header 2001, the mail text 2002, the attached file 2003, the attached file 2004, and the digital signature 2005 are separately held. When the e-mail arrives, the mail information analysis unit 2006 extracts an individual certificate and entry position information corresponding to the received e-mail, from the user information database 2007 in the server, which is a table containing individual certificates and entry position information in pairs, on the basis of the transmission source address, and performs user authentication with respect to the received e-mail by using the transmission source address. Then, the server entry unit 2008 enters the attached file in the storage device 1005 at an entry position that is indicated by the entry position information. Thereafter, the entered document is read from the common document server 1006 and displayed to the document reading client 1007.

However, according to the conventional construction, the transmission source client can store the files attached to the e-mail in the common server, but no method is disclosed by which a third party knows the entry position of the attached file which is stored in the common server to the e-mail. Accordingly, the entry position of the attached file stored in the server cannot be informed specified persons.

Further, according to the conventional construction, the document entry/update system performs the user authentication by using the transmission source mail address, and accordingly the client must access the document entry/update system by using this specific mail address. Therefore, even when the client has plural mail addresses, the user is forced to use the specific mail address when utilizing this conventional system, resulting in low convenience. Further, the user authentication that is performed by using the transmission source mail address which is located at the mail header and easily known by the third party presents problems in terms of security.

### SUMMARY OF THE INVENTION

The present invention has for its object to provide a data distribution method and a data distribution system, which enable to enter data in a server by using electronic mails without restricting terminals on transmitting ends, and inform persons with whom the data are to be shared, of entry position information corresponding to the entered data.

Other objects and advantages of the present invention will become apparent from the detailed description and specific embodiments described are provided only for illustration since various additions and modifications within the spirit and scope of the invention will be apparent to those of skill in the art from the detailed description.

According to a 1st aspect of the present invention, there is provided a data distribution method including: a first transmission step of transmitting from a transmission source to a server system an electronic mail having second electronic mail creation information including at least a receiving destination address, and user authentication information including a user ID of a transmitter, with attaching a file to the electronic mail; an authentication step of performing user authentication in the server system, on the basis of the user ID included in the user authentication information in the transmitted electronic mail, and user IDs which are previously stored in a user information database of the server system; an entry step of entering the attached file in a storage unit of the server system when the user has been authenticated; and a second transmission step of creating a URL indicating an entry position of the attached file that has been entered in the storage unit, in the server system, and transmitting a second electronic mail having the URL information to the receiving destination address that is included in the second electronic mail creation information. Therefore, the attached file which is transmitted being attached to the e-mail is retained in the server system, and the receiver of the second e-mail can view the attached file on the Web server with referring to the URL indicating the entry position of the attached file at any time when the receiver wants to view the file. Further, the user authentication is performed using the user ID information, whereby the user authentication is performed more reliably, as well as any terminal having an electronic mail function can utilize this data distribution system, resulting in great effects both on the transmitting end and the receiving end. Further, the data of the attached file are shared on the server, whereby plural clients can view the attached file.

According to a 2nd aspect of the present invention, in the data distribution method of the 1st aspect, the user authentication information that is transmitted in the first transmission step further include password information, and in the authentication step, the user authentication is performed using the user ID information and the password information. Therefore, the user authentication is performed more reliably, whereby the data distribution system has a higher security.

According to a 3rd aspect of the present invention, in the data distribution method of the 1st aspect, the electronic mail that is transmitted in the first transmission step further has entry position designation information that designates an entry position of the attached file, and in the entry step, the entry of the attached file into the storage unit in the server system is performed on the basis of the entry position designation information. Therefore, a desired entry position can be designated by the transmission source so as to enter the attached file.

According to a 4th aspect of the present invention, in the data distribution method of the 1st aspect, the electronic mail that is transmitted in the first transmission step further has transmission date/time designation information that designates a date and time when the second electronic mail is to be transmitted from the server system, and in the second transmission step, the transmission of the second electronic mail from the server system is performed at the date and time designated by the transmission date/time designation information. Therefore, the second e-mail that has the URL indicating the entry position of the attached file can be transmitted at a determined date and time, like a birthday or an anniversary, thereby further improving convenience of the user.

According to a 5th aspect of the present invention, in the data distribution method of the 1st aspect, the electronic mail that is transmitted in the first transmission step further has processing instruction information that instructing to process the attached file, and in the entry step, the attached file is entered in the storage unit of the server system after the attached file is processed on the basis of the processing instruction information. Therefore, the processing of the attached file, suiting tastes of the transmitter can be easily performed without requiring the transmission source terminal processing the attached file.

According to a 6th aspect of the present invention, in the data distribution method of the 1st aspect, the electronic mail that is transmitted in the first transmission step further has a keyword that is entered in the storage unit together with the attached file, and in the entry step, the keyword and the attached filed are entered in the storage unit in pairs. Therefore, the attached file can be entered associated with the keyword.

According to a 7th aspect of the present invention, the data distribution method of the 6th aspect further includes: a third transmission step of transmitting from the transmission source to the server system an electronic mail having the second electronic mail creation information, the user authentication information, and the keyword that is used to retrieve the entered attached file; a retrieval step of retrieving the attached file matching with the keyword, which has been entered together with the keyword in pairs, in the server system, after the user has been authenticated; and a fourth transmission step of creating a URL indicating an entry position of the retrieved attached file, and transmitting the second electronic mail having the URL information to the receiving destination address included in the second electronic mail creation information. Therefore, when the already entered attached file is to be viewed, the URL of the desired attached file can be informed the receiver of the second e-mail without attaching the attached file again to the e-mail sent from the transmission source. Further, the keyword can be added associated with the type of the attached file, whereby attached files which are associated with each other can be easily retrieved, as well as plural files having relations with each other can be easily shown to the receiver of the second e-mail.

According to an 8th aspect of the present invention, in the data distribution method of the 1st aspect, the electronic mail that is transmitted in the first transmission step has retention period designation information that designates a period in which the attached file is retained in the storage unit of the server system, and a delete step is further including for deleting the attached file from the storage unit in the server system on the basis of the retention period designation information. Therefore, it is possible to prevent unnecessary data being accumulated in the storage unit of the data entry/display system.

According to a 9th aspect of the present invention, the data distribution method of the 1st aspect further includes: an accounting step of subjecting a user who uses a data distribution system to an accounting operation in the server system, after the user has been authenticated. Therefore, it is possible to charge the users who use the data distribution system.

According to a 10th aspect of the present invention, in the data distribution method of the 9th aspect, in the accounting step, an amount of accounts is calculated on the basis of an amount of data and the retention period of the attached file that has been entered in the storage unit of the server system, and then the accounting is performed to the user who uses the data distribution system. Therefore, it is possible to charge the users who use the data distribution system, by accounts according to the amount of data and the retention period of the attached file.

According to an 11th aspect of the present invention, there is provided a data distribution system including: a transmission/receiving apparatus for transmitting an electronic mail having second electronic mail creation information including at least a receiving destination address, which is information for creating a second electronic mail, and user authentication information including a user ID of a transmitter, with attaching a file to the electronic mail; a mail server for performing mailing services among plural clients; a data entry/display system including: an analysis authentication unit for receiving the electronic mail via the mail server, and analyzing the electronic mail to perform user authentication on the basis of the user ID included in the user authentication information, and user IDs which are previously stored in a user information database that contains personal information of the users, an entry unit for entering the attached file in a storage unit that stores the attached file when the user has been authenticated, and a URL creation unit for creating a URL indicating an entry position of the attached file that has been entered in the storage unit; a mail-with-entry-information creation unit for creating the second electronic mail on the basis of the second electronic mail creation information and the URL which are outputted from the data entry/display system, and transmitting the second electronic mail to the receiving destination address included in the second electronic mail creation information; and a second transmission/receiving apparatus for receiving the second electronic mail, and viewing the attached file that has been entered in the storage unit of the data entry/display system on the basis of the URL that has been added to the second electronic mail. Therefore, the attached file which is transmitted being attached to the e-mail is retained in the server system, and the receiver of the second e-mail can view the attached file on the Web server with referring to the URL indicating the entry position of the attached file at any time when the receiver wants to view the file. Further, the user authentication is performed using the user ID information, whereby the user authentication is performed more reliably, as well as any terminal having an electronic mail function can utilize this data distribution system, resulting in great effects both on the transmitting end and the receiving end. Further, the data of the attached file are shared on the server, whereby plural clients can view the attached file.

According to a 12th aspect of the present invention, in the data distribution system of the 11th aspect, the user authentication information further includes password information, and the analysis authentication unit of the data entry/display system performs the user authentication using the user ID information and the password information. Therefore, the user authentication is performed more reliably, whereby the data distribution system has a higher security.

According to a 13th aspect of the present invention, in the data distribution system of the 11th aspect, the electronic mail further has entry position designation information that designates an entry position of the attached file, and the entry unit of the data entry/display system enters the attached file in the storage unit on the basis of the entry position designation information. Therefore, a desired entry position can be designated by the transmission source so as to enter the attached file.

According to a 14th aspect of the present invention, in the data distribution system of the 11th aspect, the electronic mail further has transmission date/time designation information that designates a date and time when the second electronic mail is to be transmitted, and the data entry/display system further includes a remainder setting unit for instructing the mail-with-entry-information creation unit to transmit the second electronic mail at the date and time designated by the transmission date/time designation information. Therefore, the second e-mail that has the URL indicating the entry position of the attached file can be transmitted at a determined date and time, like a birthday or an anniversary, thereby further improving convenience of the user.

According to a 15th aspect of the present invention, in the data distribution system of the 11th aspect, the electronic mail further has processing instruction information that instructs to process the attached file, and the data entry/display system further includes a processing unit for processing the attached file on the basis of the processing instruction information. Therefore, the processing of the attached file, suiting tastes of the transmitter can be easily performed without requiring the transmission source terminal processing the attached file.

According to a 16th aspect of the present invention, in the data distribution system of the 11th aspect, the electronic mail further has a keyword which is entered in the storage unit together with the attached file, and the entry unit of the data entry/display system enters the keyword and the attached file in pairs, in the storage unit. Therefore, the attached file can be entered associated with the keyword.

According to a 17th aspect of the present invention, in the data distribution system of the 16th aspect, the transmission/receiving apparatus transmits to the data entry/display system an electronic mail having the second electronic mail creation information, the user authentication information, and the keyword that is used to retrieve the entered attached file, the data entry/display system has a keyword retrieval unit for retrieving the attached file matching with the keyword, which has been entered together with the keyword in pairs after the user has been authenticated, and the URL creation unit of the data entry/display system creates a URL indicating an entry position of the retrieved attached file. Therefore, when the already entered attached file is to be viewed, the URL of the desired attached file can be informed the receiver of the second e-mail without attaching the attached file again to the e-mail sent from the transmission source. Further, the keyword can be added associated with the type of the attached file, whereby attached files which are associated with each other can be easily retrieved, as well as plural files having relations with each other can be easily shown to the receiver of the second e-mail.

According to an 18th aspect of the present invention, in the data distribution system of the 11th aspect, the electronic mail further has retention period designation information that designates a retention period during which the attached file is to be retained in the storage unit of the server system, and the data entry/display system has a time management unit for instructing the entry unit to delete the attached file from the storage unit after the retention period designated by the retention period designation information has expired. Therefore, it is possible to prevent unnecessary data being accumulated in the storage unit of the data entry/display system.

According to a 19th aspect of the present invention, in the data distribution system of the 11th aspect, the data entry/display system has an accounting system for performing an accounting operation to the user who uses the data distribution system, after the user has been authenticated. Therefore, it is possible to charge the users who use the data distribution system.

According to a 20th aspect of the present invention, in the data distribution system of the 19th aspect, the accounting system calculates an amount of accounts on the basis of an amount of data and a retention period of the attached file that has been entered in the storage unit of the data entry/display system, to perform the accounting to the user who uses the data distribution system. Therefore, it is possible to charge the users who use the data distribution system, by accounts according to the amount of data and the retention period of the attached file.

### BRIEF DESCRIPTION OF THE DRAWINGS

Fig. 1 is a block diagram for explaining an overview of a data distribution system according to the present invention.
Fig. 2 is a diagram showing contents of e-mail A in the data distribution system according to a first embodiment of the present invention.
Fig. 3 is a diagram showing contents of e-mail B in the data distribution system according to the first embodiment.
Fig. 4 is a block diagram illustrating a structure of a data entry/display system in the data distribution system according to the first embodiment.
Fig. 5 is a flowchart for explaining an operation of the data distribution system according to the first embodiment.
Fig. 6 is a diagram showing an example of contents of e-mail A in a data distribution system according to a second embodiment of the present invention.
Fig. 7 is a block diagram illustrating a structure of a data entry/display system in the data distribution system according to the second embodiment.
Fig. 8 is a flowchart for explaining an operation of the data distribution system according to the second embodiment.
Fig. 9 is a diagram showing an example of contents of e-mail A in a data distribution system according to a third embodiment of the present invention.
Fig. 10 is a block diagram illustrating a structure of a data entry/display system in the data distribution system according to the third embodiment.
Fig. 11 is a flowchart for explaining an operation of the data distribution system according to the third embodiment.
Fig. 12 is a diagram showing an example of contents of e-mail A in a data distribution system according to a fourth embodiment of the present invention.
Fig. 13 is a block diagram illustrating a structure of a data entry/display system in the data distribution system according to the fourth embodiment.
Fig. 14 is a flowchart for explaining an operation of the data distribution system according to the fourth embodiment.
Figs. 15(a) and 15(b) are diagrams showing examples of contents of e-mail A in a data distribution system according to a fifth embodiment of the present invention.
Fig. 16 is a block diagram illustrating a structure of a data entry/display system of the data distribution system according to the fifth embodiment.
Fig. 17 is a flowchart for explaining an operation of the data distribution system according to the fifth embodiment.
Fig. 18 is a diagram showing an example of contents of e-mail A in a data distribution system according to a sixth embodiment of the present invention.
Fig. 19 is a block diagram illustrating a structure of a data entry/display system in a data distribution system according to the sixth embodiment.
Fig. 20 is a flowchart for explaining an operation of the data distribution system according to the sixth embodiment.
Fig. 21 is a block diagram illustrating a structure of a data entry/display system of a data distribution system according to a seventh embodiment of the present invention.
Fig. 22 is a flowchart for explaining an operation of the data distribution system according to the seventh embodiment.
Fig. 23 is a diagram showing an example of a document entry/update system construction in a common document management device according to a prior art.
Fig. 24 is a block diagram illustrating a document entry/update system according to the prior art.

### DETAILED DESCRIPTION OF THE PREFERRED EMBODIMENTS

### [Embodiment 1]

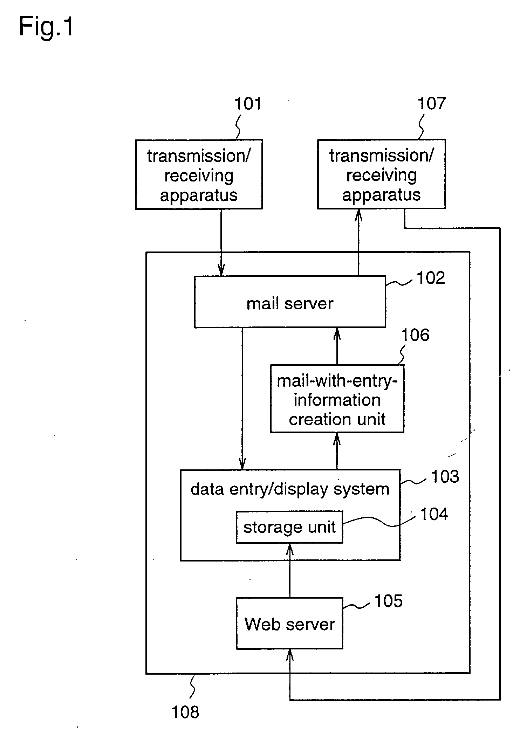

A data distribution system according to a first embodiment of the present invention enters an attached file that has been attached to an e-mail by a client in a common server, and creates a URL (Uniform Resource Locator) indicating an entry position at which the attached file has been entered, to transmit an e-mail including URL information to a predetermined client from the common server. Hereinafter, an example of this data distribution system will be described with reference to Figs. 1 to 5.

Fig. 1 is a block diagram for explaining an overview of the data distributions system according to the first embodiment.

In Fig.1, the data distribution system comprises transmission/receiving apparatuses 101 and 107, and a server system 108. The server system 108 comprises a mail server 102, a data entry/display system 103, a Web server 105, and a mail-with-entry-information creation unit 106.

The transmission/receiving apparatus 101 is a terminal, the user of which is a client A (client on a transmitting end). The transmission/receiving apparatus 101 transmits an e-mail A including an attached file (data) that is created by the client A, to the data entry/display system 103 via the mail server 102. The transmission/receiving apparatus 107 (second transmission/receiving apparatus) is a terminal, the user of which is a client B (client on a receiving end). The transmission/receiving apparatus 107 receives an e-mail B (second e-mail) transmitted from the mail server 102. The client B accesses the Web server 105 on the basis of a URL attached to the e-mail. The transmission/receiving apparatus 101 and 107 may be any terminal or the like, such as a personal computer, a mobile phone, a PDA, and an L-mode device, as long as it has an e-mail function.

The mail server 102 is a server that performs mailing services among plural clients. The data entry/display system 103 enters a file attached to an e-mail that is transmitted from the transmission/receiving apparatus 101 in a storage unit 104, as well as outputs a URL indicating its entry position to the mail-with-entry-information creation unit 106. The Web server 105 discloses the attached file stored in the entry position that is specified by the URL, to the client B via the transmission/receiving apparatus 107, in reply to a request of the transmission/receiving apparatus 107. The mail-with-entry-information creation unit 106 creates an e-mail to which the URL indicating the entry position of the attached file is added to the e-mail text, and transmits the created e-mail to the client B.

Next, contents of the e-mail A that is transmitted from the transmission/receiving apparatus 101 to the data entry/display system 103 via the mail server 102 will be described.

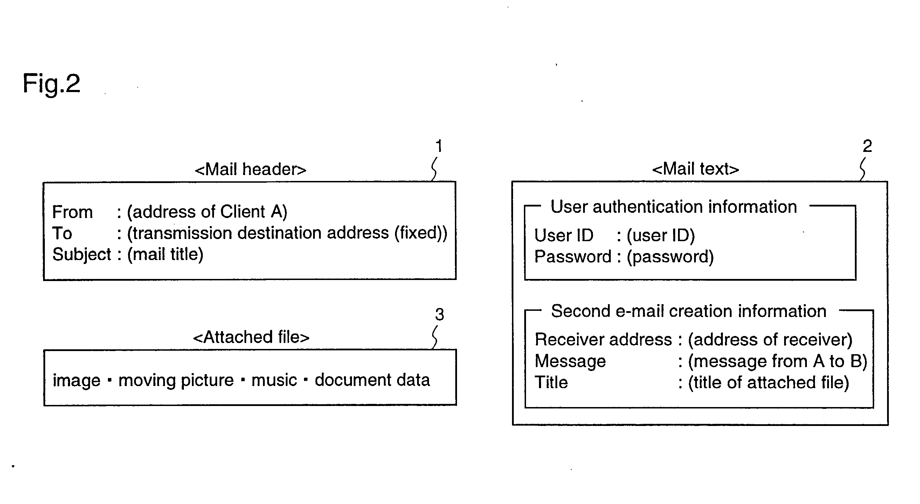

Fig. 2 is a diagram showing an example of the contents of the e-mail A that is transmitted from the transmission/receiving apparatus 101. In Fig. 2, the e-mail A comprises a mail header 1, a mail text 2, and an attached file 3.

The mail header 1 includes an address indicating the transmission/receiving apparatus 101 (transmission source of the e-mail A), an address indicating the data entry/display system 103 (transmission destination of the e-mail A), and a mail title. The mail text 2 includes user authentication information that comprises a user ID and a password which are inherent in a user for using this data distribution system, and second e-mail creation information that comprises an address indicating the transmission destination of an e-mail B, a message to a receiver of the e-mail B, and a title of the e-mail B. Here, the user authentication information means information that is used to perform user authentication, and may include only the user ID. The second e-mail creation information is information that is necessary for the mail-with-entry-information creation unit 106 to create the e-mail, and may be one that includes at least the address indicating the transmission destination of the e-mail B. The attached file 3 is an image data file (JPEG, BMP, GIF, etc), audio data, moving picture data, a text file, an application, or the like, which are attached to the e-mail A.

Next, contents of the e-mail B that is transmitted from the mail-with-entry-information creation unit 106 to the transmission/receiving apparatus 107 via the mail server 102 will be described.

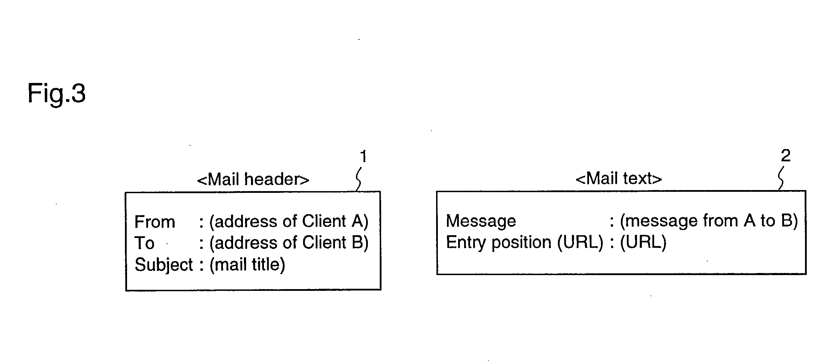

Fig. 3 is a diagram showing an example of the contents of the e-mail B that is transmitted form the mail-with-entry-information creation unit 106. In Fig. 3, the e-mail B comprises a mail header 4 and a mail text 5.

The mail header 4 includes an address indicating the transmission/receiving apparatus 101 (transmission source of the e-mail A), an address indicating the transmission/receiving apparatus 107 (the transmission destination of the e-mail B), and a mail title. The mail text 5 includes a message from the transmitter of the e-mail A to the receiver of the e-mail B, which is included in the second e-mail creation information of the e-mail A, and information (URL) corresponding to the entry position of the file attached to the e-mail A in the storage unit 104.

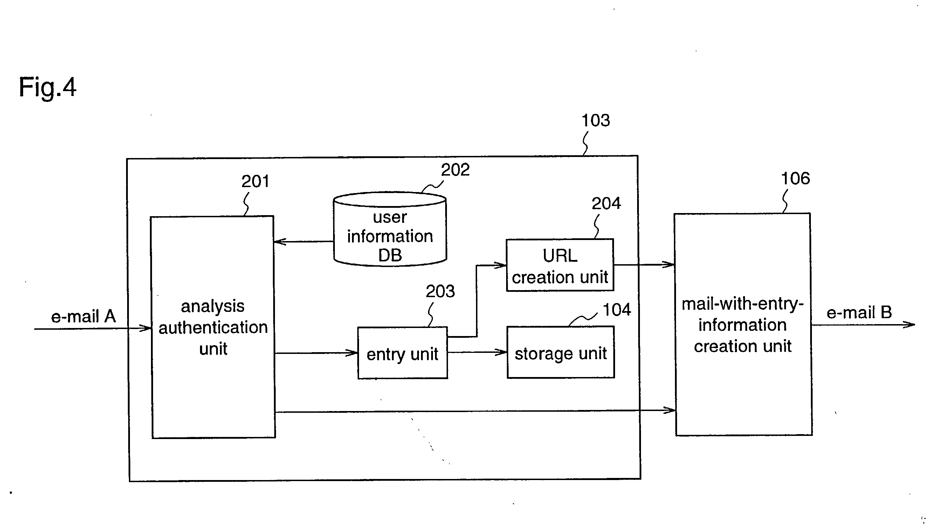

Next, a structure of the data entry/display system 103 will be described in more detail with reference to fig. 4.

Fig. 4 is a block diagram illustrating the structure of the data entry/display system 103 in the data distribution system according to the first embodiment.

In Fig. 4, the data entry/display system 103 comprises an analysis authentication unit 201, a user information database 202, an entry unit 203, a storage unit 104, and a URL creation unit 204.

The analysis authentication unit 201 analyzes the e-mail A to perform authentication as to whether the transmission source of the e-mail A is a user of this data distribution system, on the basis of whether or not a user ID and a password included in user authentication information of the mail text match with any user information comprising a user ID and a password, which is registered in the user information database 202, as well as outputs the file attached to the e-mail A to the entry unit 203, and output second e-mail creation information included in the mail text of the e-mail A to the mail-with-entry-information creation unit 106.

The user information database 202 holds user information associated with users who use this data distribution system. It is assumed here that the user information is constituted by a pair of a user ID and a password.

The entry unit 203 enters the attached file that is outputted from the analysis authentication unit 201 in the storage unit 104, as well as outputs entry position information indicating the entry position to the URL creation unit 204.

The URL creation unit 204 creates a URL indicating the entry position of the attached file on the basis of the entry position information that is outputted from the entry unit 203.

The mail-with-entry-information creation unit 106 creates the e-mail B as shown in figure 3 on the basis of the second e-mail creation information that is outputted from the analysis authentication unit 201 and the URL indicating the entry position of the attached file which is outputted from the URL creation unit 204, and transmits the created e-mail B to the transmission/receiving apparatus 107.

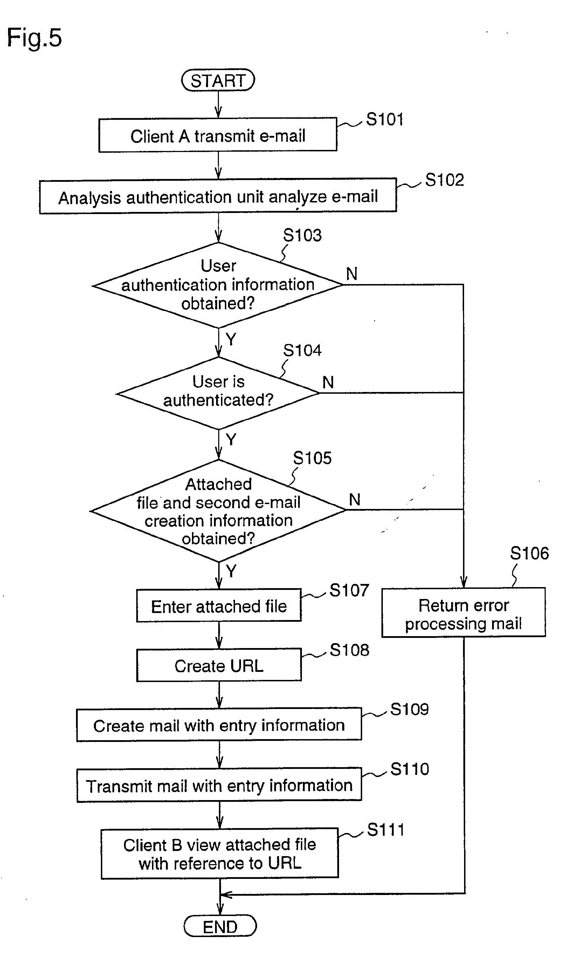

An operation of the data distribution system according to the first embodiment will be described with reference to Fig. 5.

Fig. 5 is a flowchart for explaining the operation of the data distribution system according to the first embodiment.
<Step 101> The client A manipulates the transmission/receiving apparatus 101 to transmit an e-mail A to the data entry/display system 103 via the mail server 102.
<Step 102> The analysis authentication unit 201 receives the e-mail A, and analyzes the e-mail A.
<Step 103> The analysis authentication unit 201 obtains user authentication information from the mail text of the e-mail A.
<Step 104> When obtaining the user authentication information, the analysis authentication unit 201 verifies a user ID and a password included in the user authentication information against a user ID and a password of each user information contained in the user information database 202, to authenticate the user.
<Step 105> When the user is authenticated, the analysis authentication unit 201 obtains an attached file from the e-mail A to output the obtained file to the entry unit 203, as well as obtains second e-mail creation information from the mail text of the e-mail A to output the obtained information to the mail-with-entry-information creation unit 106.
<Step 106> When the user authentication information cannot be obtained in Step 103, or when the user is not authenticated in Step 104, or when the attached file and the second e-mail creation information cannot be obtained in Step 105, an error processing mail is returned to the client A.
<Step 107> The entry unit 203 enters the attached file that is outputted from the analysis authentication unit 201 in the storage unit 104, and outputs the entry position information indicating the entry position of the attached file to the URL creation unit 204.
<Step 108> The URL creation unit 204 creates a URL indicating the entry position of the attached file on the basis of the entry position information that is outputted from the entry unit 203. Here, the URL is a description format that indicates an entry position in the Internet, like http://www.picturestage.ne.jp/yuko/hawaii.html.
<Step 109> The mail-with-entry-information creation unit 106 creates an e-mail B on the basis of the second e-mail creation information that is outputted from the analysis authentication unit 201, and the URL that is outputted from the URL creation unit 204.
<Step 110> The mail-with-entry-information creation unit 106 transmits the e-mail B created in Step 109 to the client B that is the e-mail transmission destination included in the second e-mail creation information.
<Step 111> The client B views the attached file which has been transmitted by the client A, being attached to the e-mail A, via the Web server 105, with referring to the URL described in the e-mail B that is transmitted to the transmission/receiving apparatus 107.

As described above, in this first embodiment, the file attached to the e-mail A which is transmitted from the client A as the transmission source is entered in the data entry/display system 103 as the common server, and the URL indicating the entry position is created to transmit the e-mail B including the URL information from the common server to the client B as the transmission destination. Therefore, the attached file that is transmitted by the client A is retained in the data entry/display system 103, and the client B can view the attached file on the Web server with referring to the URL transmitted via the e-mail B at any time when the client B wants to view the file.

In addition, since the client A can store the attached file in the data entry/display system 103, there is no necessity to pay attention to the memory capacities of the terminals used by the clients A and B. Further, the data of the attached file are shared on the server, whereby plural clients can view the attached file.

In addition, the user authentication is performed by using the user ID and the password, thereby realizing a data distribution system having a higher security. Further, the transmission and receiving of the information between the client A or B and the common server is performed using e-mails. Accordingly, any terminal can utilize this data distribution system as long as it has an e-mail function, whereby great effects can be obtained both on the transmitting end and on the receiving end.

In the data distribution system according to the first embodiment, the entry position of the attached file that is transmitted being attached to the e-mail A is informed by transmitting the e-mail B to the client B. However, the client B on the receiving end is not limited to one, and the similar e-mail B can be transmitted to clients on plural receiving ends, thereby to inform the clients on the plural receiving end of the entry position of the attached file.

Further, in this data distribution system according to the first embodiment, the client B accesses the http Web server, but it is possible to download the data using FTP or the like to view the attached file.

In this data distribution system according to the first embodiment, the user authentication is performed by using the user ID and the password, while it goes without saying that the user authentication may be performed by using only the user ID.

### [Embodiment 2]

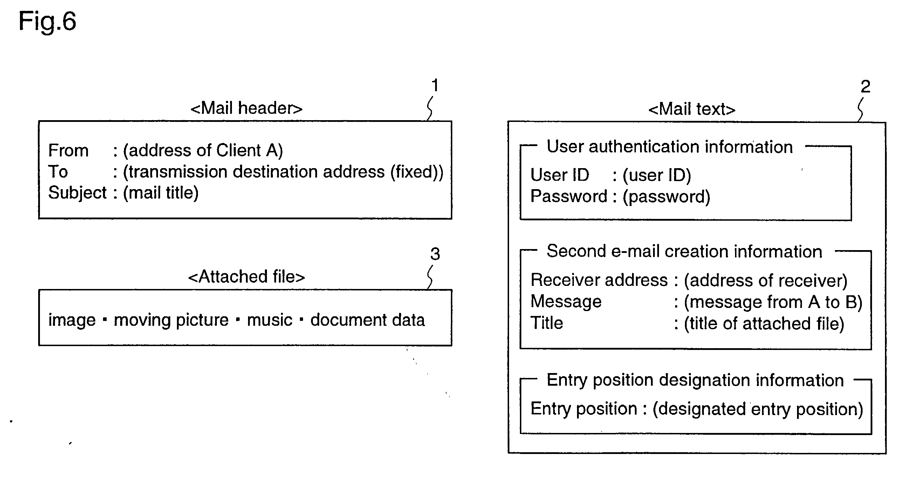

A data distribution system according to a second embodiment of the present invention will be described with reference to Figs. 6 to 8.

The data distribution system according to the second embodiment has the structure of the data distribution system according to the first embodiment, and further designates an entry position at which a file attached to an e-mail is to be entered when the client A transmits an e-mail including an attached file, and the data entry/display system 103 enters the attached file in the designated entry position.

The data distribution system according to the second embodiment and the data distribution system according to the first embodiment have the same data distribution system overview as shown in Fig. 1, but are different from each other in the contents of the e-mail A that is transmitted from the transmission/receiving apparatus 101 and the structure and operation of the data entry/display system.

Fig. 6 is a diagram showing an example of the contents of the e-mail A that is transmitted from the transmission/receiving apparatus 101.

As shown in Fig. 6, the e-mail A that is transmitted from the transmission/receiving apparatus 101 according to the second embodiment includes the contents of the e-mail A as shown in Fig. 2, and further includes in the mail text 2 entry position designation information for designating an entry position at which the attached file is to be entered.

Next, the data entry/display system 103 that receives the e-mail A as shown in Fig. 6 from the transmission/receiving apparatus 101 will be described.

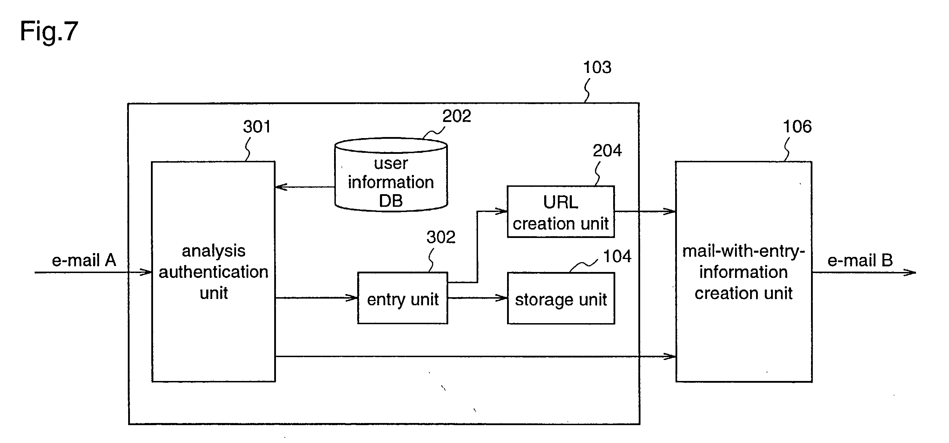

Fig. 7 is a block diagram illustrating a structure of the data entry/display system 103 in the data distribution system according to the second embodiment. Here, the same components as those in the data distribution according to the first embodiment are denoted by the same reference numerals.

In Fig. 7, the data entry/display system 103 includes an analysis authentication unit 301, a user information database 202, an entry unit 302, a storage unit 104, and a URL creation unit 204.

The analysis authentication unit 301 analyzes the e-mail A to perform authentication as to whether the transmission source of the e-mail A is a user of this data distribution system on the basis of whether or not a user ID and a password included in the user authentication information of the mail text matches with any user information comprising a user ID and a password, which is registered in the user information database 202, as well as outputs the file attached to the e-mail A and entry position designation information included in the mail text of the e-mail A to the entry unit 302, and outputs second e-mail creation information included in the mail text to the mail-with-entry-information creation unit 106.

The entry unit 302 enters the attached file that is outputted from the analysis authentication unit 301 at an entry position in the storage unit 104, which is designated by the entry position designation information, as well as outputs entry position information indicating the entry position to the URL creation unit 204.

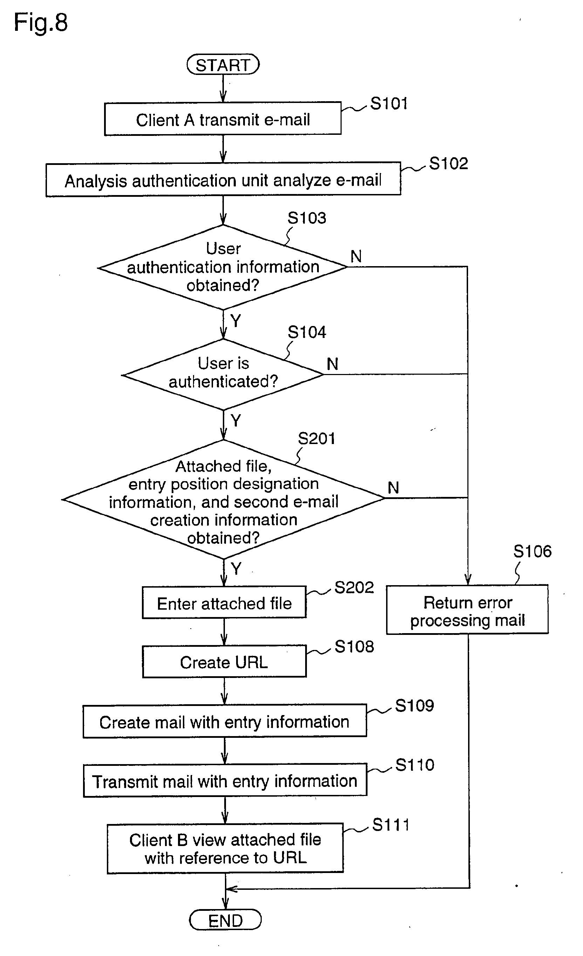

An operation of the data distribution system according to the second embodiment will be described with reference to Fig. 8.

Fig. 8 is a flowchart for explaining the operation of the data distribution system according to the second embodiment. The same processes as those in the data distribution system according to the first embodiment, which have been described with reference to Fig. 5, are denoted by the same reference numerals, and are not described here.
<Step 201> When the user is authenticated in Step 104, the analysis authentication unit 301 obtains from the e-mail A the attached file and the entry position designation information included in the mail text to output the same to the entry unit 302, as well as obtains the second e-mail creation information from the mail text of the e-mail A to output the same to the mail-with-entry-information creation unit 106.
<Step 202> The entry unit 302 enters the attached file in the storage unit 104 on the basis of the entry position designation information that is outputted from the analysis authentication unit 301, and outputs entry position information indicating the entry position of the attached file to the URL creation unit 204.

As described above, in the data distribution system according to the second embodiment, the client A transmits the entry position designation information together with the attached file, whereby the client A can enter the attached file at a desired entry position in the storage unit 104. Further, when the client A enters the attached file in the storage unit 104 and then wants to show the entered attached file to the client B, the client A transmits an e-mail indicating the entry position of the already entered attached file to the data entry/display system 103, and then the data entry/display system 103 creates a URL of the attached file on the basis of the transmitted entry position to transmit the URL to the client B. Therefore, the attached file can be shown to the client B without transmitting an e-mail including the attached file from the client A.

As one of the attached file entry methods, when a folder is previously provided in the storage unit 104 and the entry position of the provided folder is designated to enter and manage plural attached files in the folder, all of the attached files entered in the folder can be easily shown to the client B by using a URL corresponding to the entry position of the folder.

### [Embodiment 3]

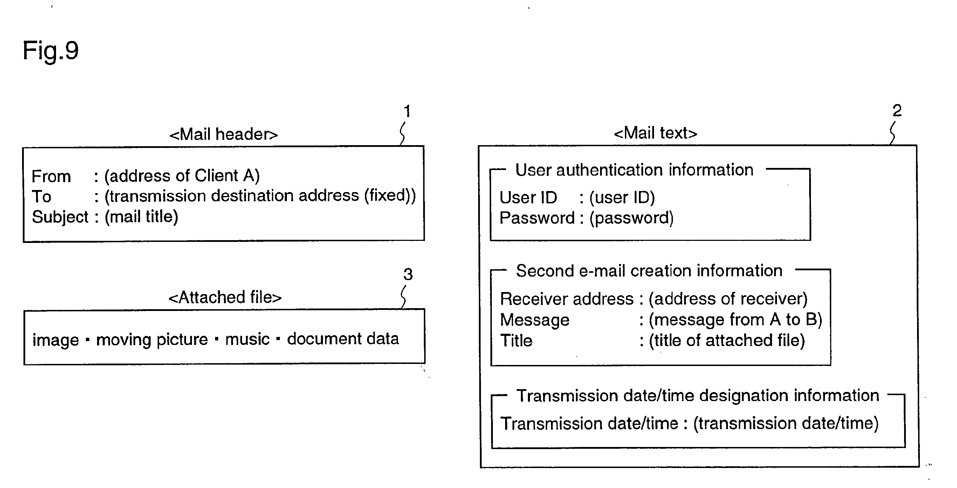

A data distribution system according to a third embodiment of the present invention will be described with reference to Figs. 9 to 11.

The data distribution system according to the third embodiment has the structure of the data distribution system according to the first embodiment, and further designates the date and time when an e-mail A is to be transmitted to the client B when the client A transmits the e-mail A including an attached file to the data entry/display system, and the mail-with-entry-information creation unit transmits the e-mail to the client B at the designates date and time.

The data distribution system according to the third embodiment and the data distribution system according to the first embodiment have the same data distribution system overview as shown in Fig. 1, but are different from each other in the contents of the e-mail A that is transmitted from the transmission/receiving apparatus 101 and the structure and operation of the data entry/display system.

Fig. 9 is a diagram showing an example of the contents of the e-mail A that is transmitted from the transmission/receiving apparatus 101.

As shown in Fig.9, the e-mail A transmitted from the transmission/receiving apparatus 101 according to the third embodiment includes the contents of the e-mail A as shown in Fig. 2, and further includes in the mail text 2 transmission date/time designation information for designating the date and time when the e-mail is to be transmitted to the client B.

Next, the data entry/display system that receives the e-mail A as shown in Fig. 9 from the transmission/receiving apparatus 101 will be described.

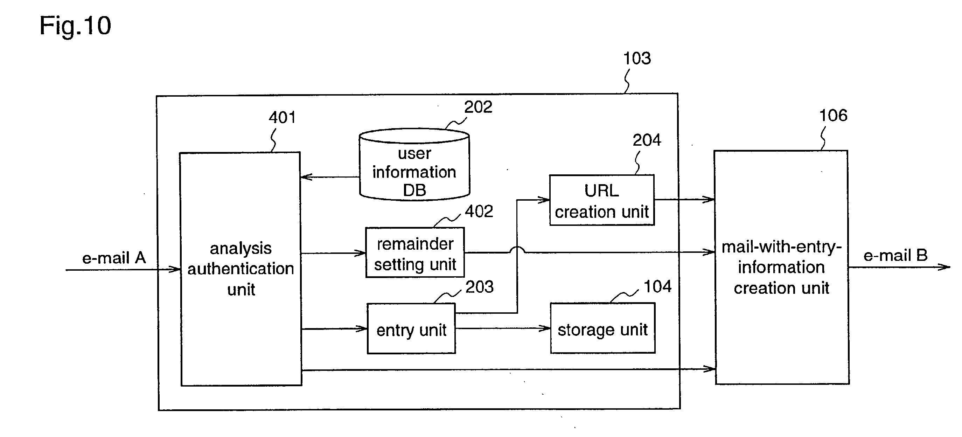

Fig. 10 is a block diagram illustrating a structure of the data entry/display system 103 in the data distribution system according to the third embodiment. The same components as those in the data distribution system according to the first embodiment are denoted by the same reference numerals.

In Fig. 10, the data entry/display system 103 includes an analysis authentication unit 401, a user information database 202, an entry unit 203, a storage unit 104, a URL creation unit 204, and a remainder setting unit 402.

The analysis authentication unit 401 analyzes the e-mail A to perform authentication as to whether the transmission source of the e-mail A is a user of this data distribution system on the basis of whether or not a user ID and a password included in the user authentication information of the mail text matches with any user information comprising a user ID and a password, which is registered in the user information database 202, as well as outputs the file attached to the e-mail A to the entry unit 203, the transmission date/time designation information included in the mail text to the remainder setting unit 402, and the second e-mail creation information included in the mail text to the mail-with-entry-information creation unit 106.

The remainder setting unit 402 includes a timer means that ticks the time, and designates the date and time when the e-mail is to be transmitted to the mail-with-entry-information creation unit 106 on the basis of the transmission date/time designation information that is outputted from the analysis authentication unit 401.

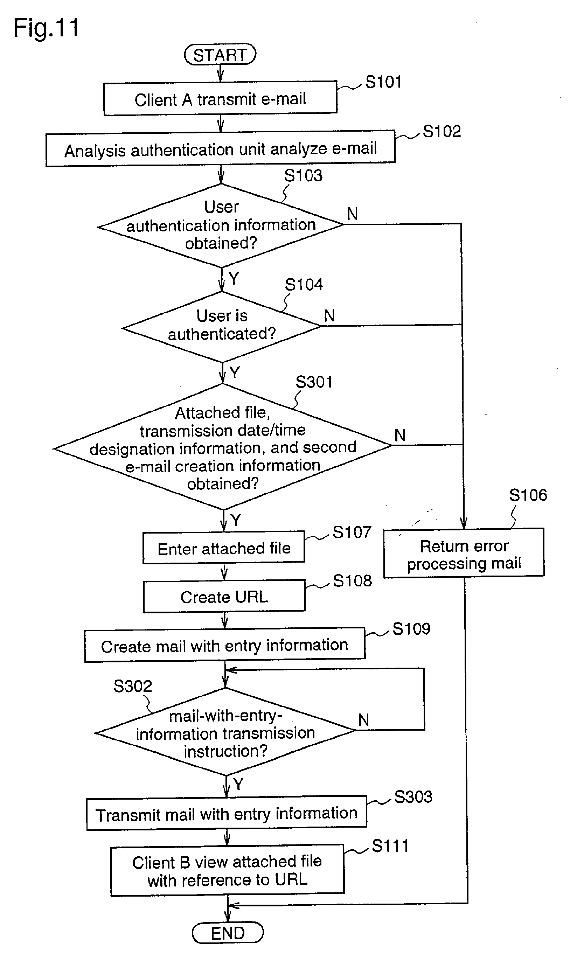

An operation of the data distribution system according to the third embodiment will be described with reference to Fig. 11.

Fig. 11 is a flowchart for explaining the operation of the data distribution system according to the third embodiment. The same processes as those of the data distribution system according to the first embodiment, which have been described with reference to Fig. 5 are denoted by the same reference numerals, and are not described here.
<Step 301> When the user is authenticated in Step 104, the analysis authentication unit 401 outputs the attached file from the e-mail A to the entry unit 203, as well as obtains the second e-mail creation information and the transmission date/time designation information from the mail text of the e-mail A, and outputs the second e-mail creation information to the mail-with-entry-information creation unit 106, and the transmission date/time designation information to the remainder setting unit 402.
<Step 302> The remainder setting unit 402 instructs to the mail-with-entry-information creation unit 106 to transmit an e-mail when the timer included in the remainder setting unit 402 shows the date and time designated by the transmission date/time designation information that is outputted from the analysis authentication unit 401.
<Step 303> The mail-with-entry-information creation unit 106 retains the e-mail B until it receives the instruction from the remainder setting unit 402, and transmits the e-mail B that has been created in Step 109 to the client B as the e-mail transmission destination included in the second e-mail creation information, when receiving the instruction from the remainder setting unit 402.

As described above, the data distribution system according to the third embodiment is provided with the remainder setting unit for controlling the date and time when the e-mail B is to be transmitted to the client B. Therefore, the e-mail B that has the URL information indicating the entry position of the attached file can be transmitted to the client B at a determined date and time such as a birthday and an anniversary, thereby increasing the convenience of the user.

In the data distribution system according to the third embodiment, the mail-with-entry-information creation unit 106 previously creates the e-mail B, and transmits the e-mail B upon receipt of the transmission instruction from the remainder setting unit 402. However, when the mail-with-entry-information creation unit 106 creates and transmits the e-mail B upon receipt of the instruction from the remainder setting unit 402, the same effects can be obtained.

### [Embodiment 4]

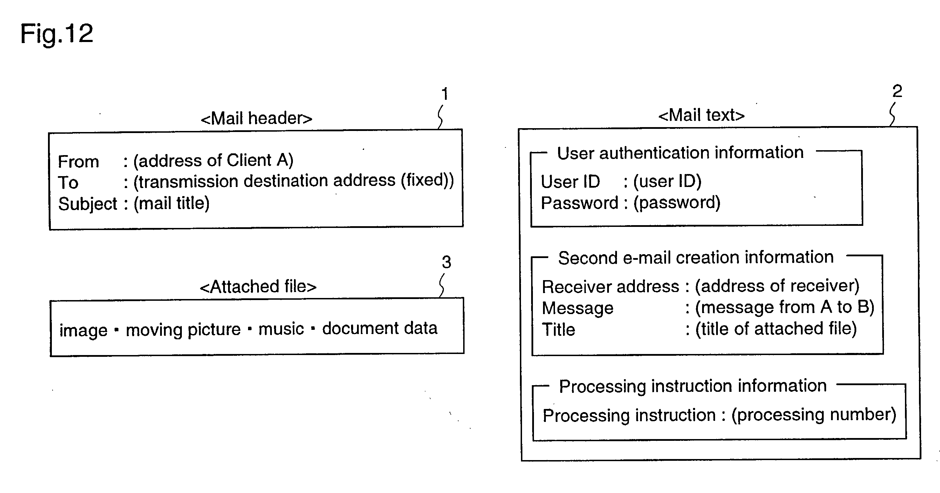

A data distribution system according to a fourth embodiment of the present invention will be described with reference to Fig. 12 to 14.

The data distribution system according to the fourth embodiment has the structure of the data distribution system according to the first embodiment, and further issues a processing instruction that instructs to process an attached file when the client A transmits an e-mail including an attached file, then the data entry/display system processes the attached file in accordance with the processing instruction, and thereafter enters the processed attached file data.

Accordingly, the data distribution system according to the fourth embodiment and the data distribution system according to the first embodiment have the same data distribution system overview as shown in figure 1, but are different from each other in the contents of the e-mail A that is transmitted from the transmission/receiving apparatus 101 and the structure and operation of the data entry/display system.

Fig. 12 is a diagram showing an example of the contents of the e-mail A that is transmitted from the transmission/receiving apparatus 101.

As shown in Fig. 12, the e-mail A that is transmitted from the transmission/receiving apparatus 101 according to the fourth embodiment includes the contents of the e-mail A as shown in Fig. 2, and further includes in the mail text 2 processing instruction information instructs to process the attached file.

Next, the data entry/display system that receives the e-mail A as shown in Fig. 12 from the transmission/receiving apparatus 101 will be described.

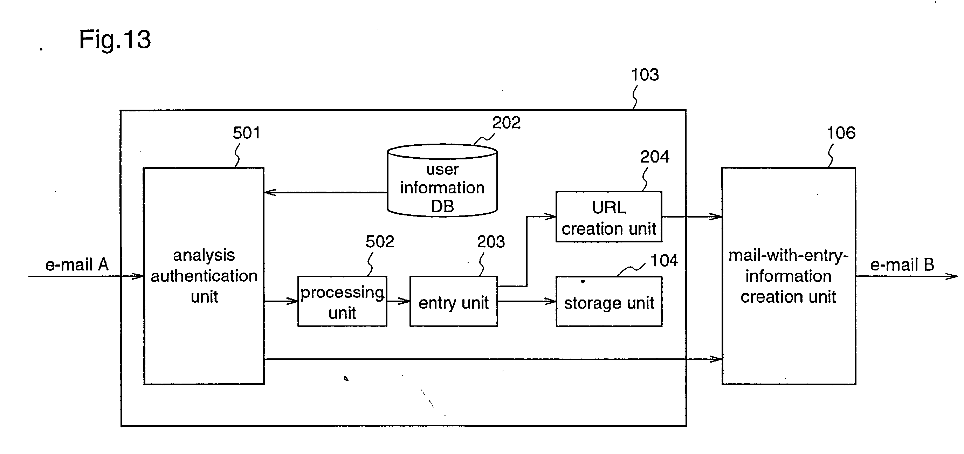

Fig. 13 is a block diagram illustrating a structure of the data entry/display system 103 in the data distribution system according to the fourth embodiment. Here, the same components as those in the data distribution system according to the first embodiment are denoted by the same reference numerals.

In Fig. 13, the data entry/display system 103 comprises an analysis authentication unit 501, a user information database 202, an entry unit 203, a storage unit 104, a URL creation unit 204, and a processing unit 502.

The analysis authentication unit 501 analyzes an e-mail A to perform authentication as to whether the transmission source of the e-mail A is a user of this data distribution system on the basis of whether or not a user ID and a password included in the user authentication information of the mail text matches with any user information comprising a user ID and a password, which is registered in the user information database 202, as well as outputs the file attached to the e-mail A and the processing instruction information included in the mail text to the processing unit 502, and outputs second e-mail creation information included in the mail text to the mail-with-entry-information creation unit 106.

The processing unit 502 carried out a processing operation that is indicated by a processing number of the processing instruction information outputted from the analysis authentication unit 501. The processing unit 502 includes plural applications for processing the attached file and, for example, when the attached file is image data, the processing unit 502 activates an application for performing image processing to add a "heart shaped" or "star shaped" frame to the file, to perform deformation of the image data, such as "inflation" or "retraction", or to change the processing form such as "monochrome" or "mosaic", in accordance with the processing instruction information.

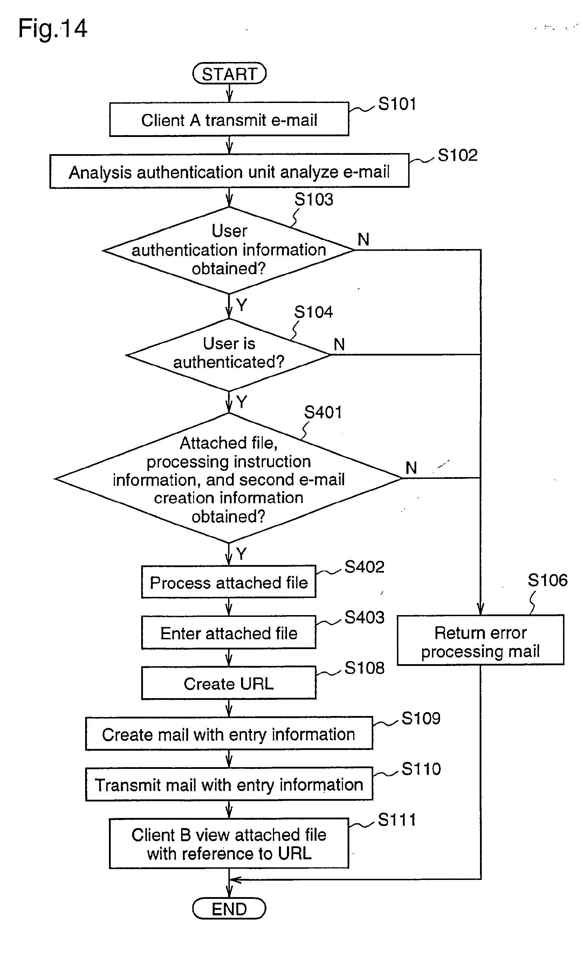

An operation of the data distribution system according to the fourth embodiment will be described with reference to Fig. 14.

Fig. 14 is a flowchart for explaining the operation of the data distribution system according to the fourth embodiment. The same processes as those of the data distribution system according to the first embodiment, which have been described with reference to Fig. 5 are denoted by the same reference numerals, and are not described here.
<Step 401> When the user is authenticated in Step 104, the analysis authentication unit 501 obtains the attached file from the e-mail A, the second e-mail creation information and the processing instruction information from the mail text of the e-mail A, and outputs the second e-mail creation information to the mail-with-entry-information creation unit 106 and the attached file and the processing instruction information to the processing unit 502.
<Step 402> The processing unit 502 processes the attached file in accordance with the processing instruction information that is outputted from the analysis authentication unit 501, and outputs the processed attached file to the entry unit 203.
<Step 403> The entry unit 203 enters the processed attached file that is outputted from the processing unit 502, in the storage unit 104, and outputs entry position information indicating the entry position of the attached file to the URL creation unit 204.

As described above, the data distribution system according to the fourth embodiment is provided with the processing unit 502 for processing the attached file data. Accordingly, the attached file suiting taste of the client A can be easily supplied to the client B without processing the attached file by the client A with using the transmission/receiving apparatus 101.

### [Embodiment 5]

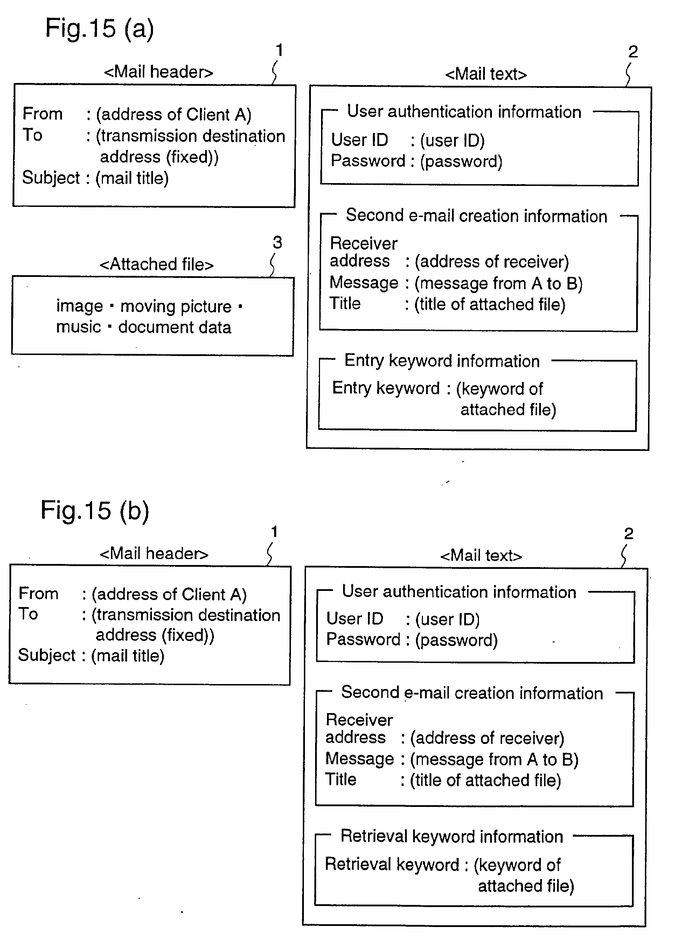

A data distribution system according to a fifth embodiment of the present invention will be described with reference to Figs. 15 to 17.

The data distribution system according to the fifth embodiment has the structure of the data distribution system according to the first embodiment, and further enables the client A to transmit a keyword together with an attached file when the client A transmits an e-mail including an attached file, and the data entry/display system to entry the attached file and the keyword in pairs as well as the client A to designate the entered attached file using the keyword.

The data distribution system of the fifth embodiment and the data distribution system of the first embodiment have the same data distribution system overview as shown in Fig. 1, but are different from each other in the contents of the e-mail A that is transmitted from the transmission/receiving apparatus 101, and the structure and operation of the data entry/display system.

Figs. 15 are diagrams showing examples of the contents of the e-mail A that is transmitted from the transmission/receiving apparatus 101. Fig. 15(a) shows an e-mail with attached file, which is transmitted when the attached file is entered. Fig. 15(b) shows an e-mail without attached file, which is transmitted when the attached file is retrieved.

As shown in Fig. 15(a), the e-mail A with attached file includes the contents of the e-mail A as shown in Fig. 2, as well as includes in the mail text 2 entry keyword information that is entered together with the attached file.

As shown in Fig. 15(b), the e-mail A without attached file includes the contents of the e-mail A as shown in Fig. 2, as well as retrieval keyword information for detecting a desired attached file from already entered attached files.

The keyword corresponding to the contents of the keyword information may be a word, a serial number or the like, as long as it can designate one or plural attached files.

Next, the data entry/display system 103 that receives the e-mail A as shown in Figs. 15 from the transmission/receiving apparatus 101 will be described.

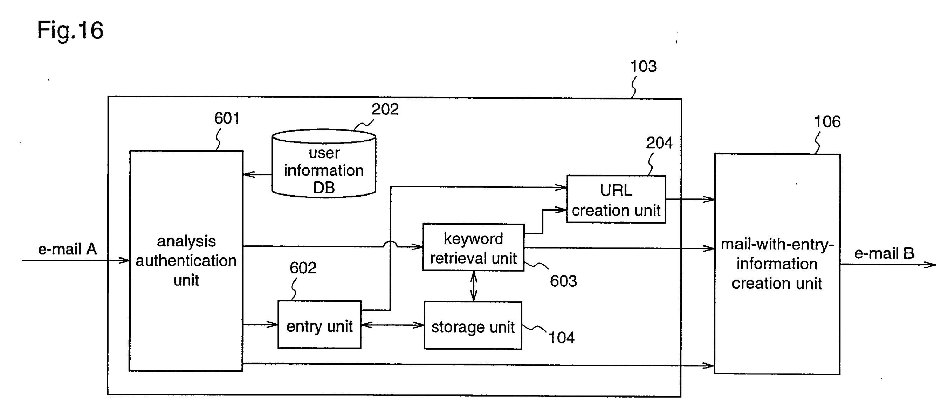

Fig. 16 is a block diagram illustrating a structure of the data entry/display system 103 in the data distribution system according to the fifth embodiment. Here, the same components as those of the data distribution system according to the first embodiment are denoted by the same reference numerals.

In Fig. 16, the data entry/display system 103 comprises an analysis authentication unit 601, a user information database 202, an entry unit 602, a storage unit 104, a URL creation unit 204, and a keyword retrieval unit 603.

The analysis authentication unit 601 analyzes an e-mail A to perform authentication as to whether the transmission source of the e-mail A is a user of this data distribution system on the basis of whether or not a user ID and a password included in the user authentication information of the mail text matches with any user information comprising a user ID and a password, which is registered in the user information database 202. Further, when receiving the e-mail as shown in Fig. 15(a), the analysis authentication unit 601 outputs the attached file and the entry keyword information included in the mail text to the entry unit 602 and outputs the second e-mail creation information included in the mail text to the mail-with-entry-information creation unit 106. When receiving the e-mail as shown in Fig. 15(b), the analysis authentication unit 601 performs the user authentication, then outputs the retrieval keyword information included in the mail text to the keyword retrieval unit 603, and outputs the second e-mail creation information included in the mail text to the mail-with-entry-information creation unit 106.

The entry unit 602 enters in the storage unit 104 the attached file and the keyword corresponding to the entry keyword information in pairs, which are outputted from the analysis authentication unit 601, and outputs entry position information indicating the entry position to the URL creation unit 204.

The keyword retrieval unit 603 searches the storage unit 104 using the keyword corresponding to the retrieval keyword information that is outputted from the analysis authentication unit 601, and outputs the entry position information indicating the entry position of the attached file, which matches with the keyword, to the URL creation unit 204.

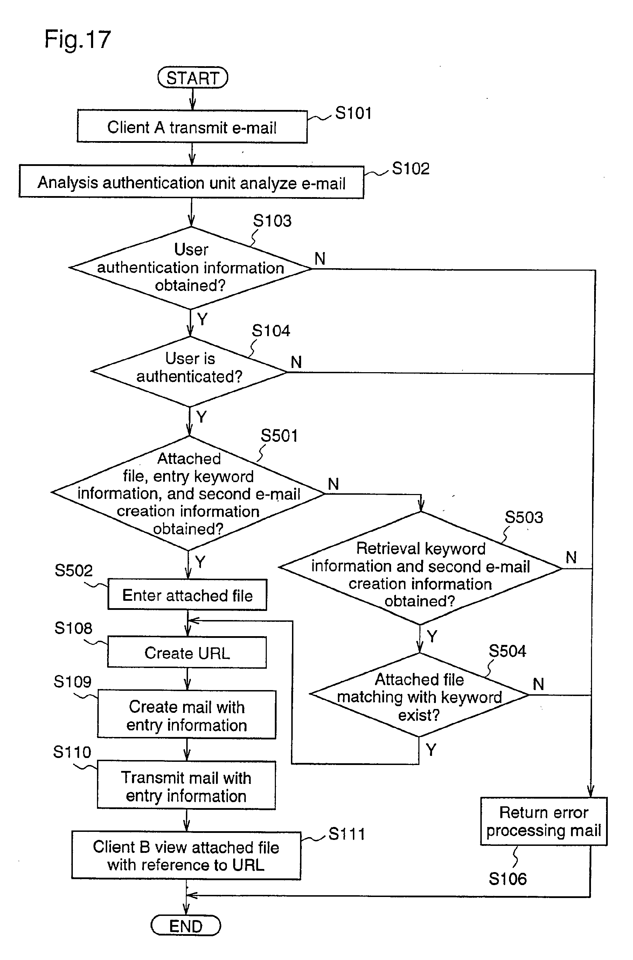

An operation of the data distribution system according to the fifth embodiment will be described with reference to Fig. 17.

Fig. 17 is a flowchart for explaining the operation of the data distribution system according to the fifth embodiment. The same processes as those of the data distribution system according to the first embodiment, which have been described with reference to Fig. 5 are denoted by the same reference numerals, and are not described here.
<Step 501> When the user is authenticated in Step 104, the analysis authentication unit 601 decides whether the attached file from the e-mail A, and the second e-mail creation information and the entry keyword information from the mail text of the e-mail A can be obtained or not and, when these data are obtained, outputs the second e-mail creation information to the mail-with-entry-information creation unit 106, and the attached file and the entry keyword information to the entry unit 602.
<Step 502> The entry unit 602 enters the attached file and the keyword, which are outputted from the analysis authentication unit 601, in pairs in the storage unit 104, and outputs the entry position information indicating the entry position of the attached file to the URL creation unit 204.
<Step 503> When the predetermined data cannot be obtained in Step 501, the analysis authentication unit 601 decides whether the second e-mail creation information and the retrieval keyword information can be obtained or not from the mail text of the e-mail A and, when these data are obtained, outputs the second e-mail creation information to the mail-with-entry-information creation unit 106 and the retrieval keyword information to the keyword retrieval unit 603.
<Step 504> The keyword retrieval unit 603 searches the storage unit 104 using the keyword corresponding to the retrieval keyword information that is outputted from the analysis authentication unit 601, and outputs the entry position information indicating the entry position of the attached file, which matches with the keyword, to the URL creation unit 204.

As described above, according to the data distribution system according to the fifth embodiment, the keywords are entered in the storage unit 104 together with the attached files. Accordingly, as for the once entered attached files, the client B can be informed of the URL of the desired attached file only by transmitting the keyword being included in the e-mail A from the second time.

When the keywords are attached associated with the types of the attached files, attached files which are associated with each other can be easily retrieved, as well as plural files having relation with each other can be easily shown to the client B.

In this fifth embodiment, the attached file is entered together with the keyword, while the e-mail including the URL is simultaneously transmitted to the client B. However, it is possible that the client A can previously perform only entry of the keyword and the attached file, and later retrieves the entry position of the attached file using the keyword, to inform the client B of the URL of the attached file.

### [Embodiment 6]

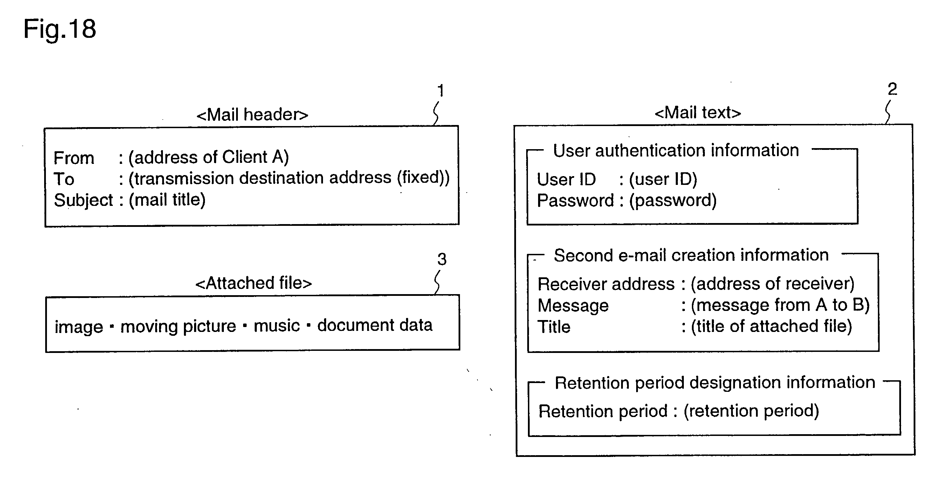

A data distribution system according to a sixth embodiment of the present invention will be described with reference to Figs. 18 to 20.

The data distribution system according to the sixth embodiment has the structure of the data distribution system according to the first embodiment, and further designates a retention period of an attached file which is entered in the storage unit when the client A transmits an e-mail including an attached file, and the entry unit of data entry/display system deletes the attached file data which is entered in the stored unit after the designated retention period has expired.

The data distribution system according to the sixth embodiment and the data distribution system according to the first embodiment have the same data distribution system overview shown in Fig. 1, but are different from each other in the contents of the e-mail A that is transmitted from the transmission/receiving apparatus 101, and the structure and operation of the data entry/display system.

Fig. 18 is a diagram showing an example of the contents of the e-mail A that is transmitted from the transmission/receiving apparatus 101.

As shown in Fig. 18, the e-mail A that is transmitted from the transmission/receiving apparatus 101 according to the sixth embodiment includes the contents of the e-mail A as shown in Fig. 2 and further includes in the mail text 2 retention period designation information that designates a retention period of the attached file.

Next, the data entry/display system 103 that receives the e-mail A as shown in Fig. 18 from the transmission/receiving apparatus 101 will be described.

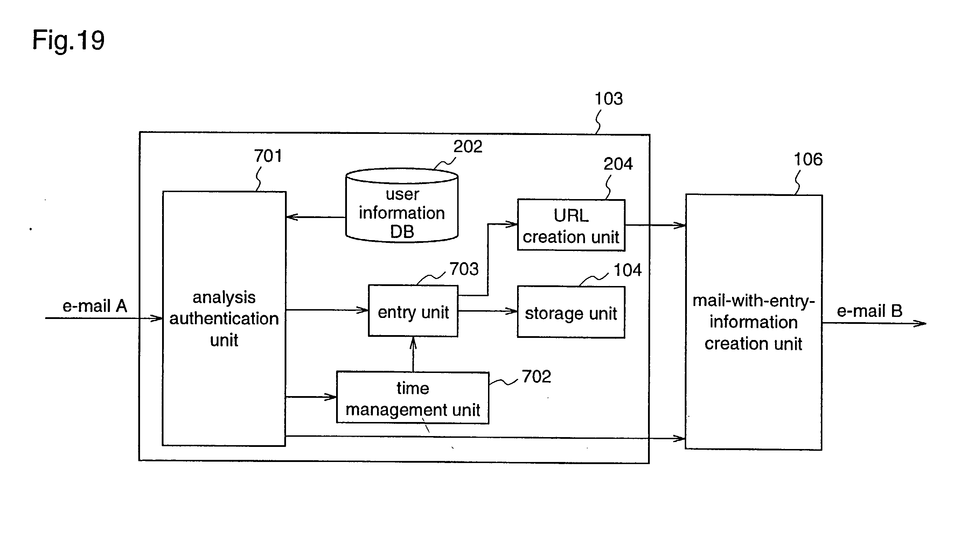

Fig. 19 is a block diagram illustrating a structure of the data entry/display system 103 according to the data distribution system according to the sixth embodiment. The same components as those of the data distribution system according to the first embodiment are denoted by the same reference numerals.

In Fig. 19, the data entry/display system 103 comprises an analysis authentication unit 701, a user information database 202, an entry unit 703, a storage unit 104, a URL creation unit 204, and a time management unit 702.

The analysis authentication unit 701 analyzes an e-mail A to perform authentication as to whether the transmission source of the e-mail is a user of this data distribution system on the basis of whether or not a user ID and a password included in the user authentication information of the mail text matches with any user information comprising a user ID and a password, which is registered in the user information database 202, as well as outputs the attached file to the entry unit 703, the retention period designation information included in the mail text to the time management unit 702, and the second e-mail creation information included in the mail text to the mail-with-entry-information creation unit 106.

The time management unit 702 has a timer means that ticks the time, and outputs an instruction to the entry unit 703 to delete the attached file that is entered in the storage unit 104, when a time period in which the attached file is retained after being entered in the storage unit 104 exceeds the retention period designated by the retention time designation information that is outputted from the analysis authentication unit 701.

The entry unit 703 enters the attached file outputted from the analysis authentication unit 701, in the storage unit 104, as well as outputs the entry position information indicating the entry position to the URL creation unit 204. When receiving the deletion instruction from the time management unit 702, the entry unit 703 deletes the attached file entered in the storage unit 104, in accordance with the deletion instruction.

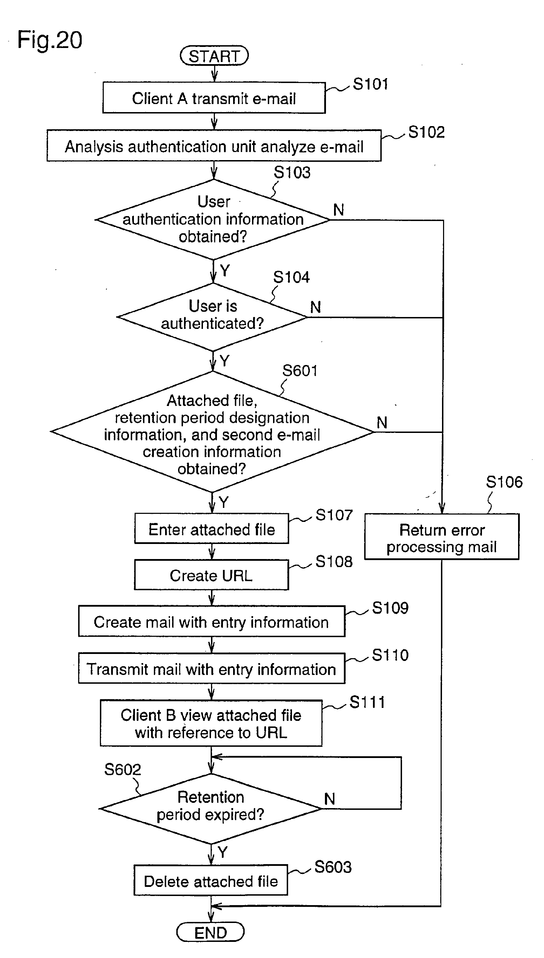

An operation of the data distribution system according to the sixth embodiment will be described with reference to Fig. 20.

Fig. 20 is a flowchart for explaining the operation of the data distribution system according to the sixth embodiment. The same processes as those of the data distribution system according to the first embodiment, which have been described with reference to Fi. 5 are denoted by the same reference numerals, and are not described here.
<Step 601> When the user is authenticated in Step 104, the analysis authentication unit 701 obtains the attached file from the e-mail A, and the second e-mail creation information and the retention period designation information from the mail text of the e-mail A, and outputs the second e-mail creation information to the mail-with-entry-information creation unit 106, the attached file to the entry unit 703, and the retention period designation information to the time management unit 702.
<Step 602> The time management unit 702 decides whether the time period in which the attached file is retained from when the attached file was entered in the storage unit 104 exceeds the retention period designated by the retention period designation information that is outputted from the analysis authentication unit 701 or not, and outputs the delete instruction to the entry unit 703 to delete the attached file that is entered in the storage unit 104, when the designated retention period has expired.
<Step 603> The entry unit 703 receives the attached file delete instruction from the time management unit 702, and deletes the attached file that is entered in the storage unit 104 in accordance with the delete instruction.

As described above, according to the data distribution system according to the sixth embodiment, the user designates the retention period of the attached file, and then the entered attached file is deleted when the retention period has expired. Accordingly, it is possible to prevent unnecessary data from being accumulated in the storage unit 104 in the data entry/display system 103.

### [Embodiment 7]

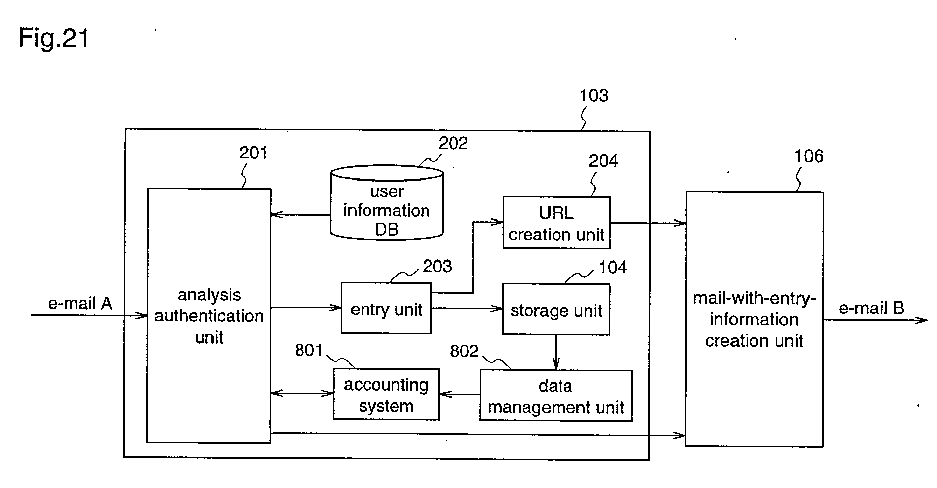

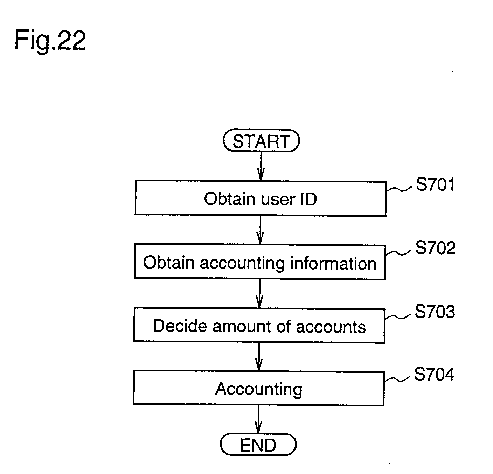

A data distribution system according to a seventh embodiment of the present invention will be described with reference to Figs. 21 and 22.

The data distribution system according to the seventh embodiment has the structure of the data distribution system according to the first embodiment, and further performs an accounting operation with respect to users of this data distribution system.

The data distribution system of the seventh embodiment and the data distribution system of the first embodiment have the same data distribution system overview as shown in Fig. 1, but are different from each other in the structure and operation of the data entry/display system.

Fig. 21 is a block diagram illustrating a structure of the data entry/display system 103 in the data distribution system according to the seventh embodiment. The same components as those in the data distribution system 103 according to the first embodiment are denoted by the same reference numerals.

In Fig. 21, the data entry/display system 103 comprises an analysis authentication unit 201, a user information database 202, an entry unit 203, a storage unit 104, a URL creation unit 204, an accounting system 801, and a data management unit 802.

The accounting system 801 subjects a user who has been authenticated by the analysis authentication unit 201 to an accounting operation, on the basis of accounting information that is outputted from the data management unit 802.

The data management unit 802 manages information such as the amount of data and the retention period of the attached file that is entered in the storage unit 104, and outputs accounting information to the accounting system 801, which information is required for the accounting system 801 to decide the amount of accounts with respect to the user.

An operation of the data distribution system according to the seventh embodiment will be specifically described. The operations of the analysis authentication unit 201, the user information database 202, the entry unit 203, the storage unit 104, and the URL creation unit 204 of the data distribution system according to the seventh embodiment are the same as those in the data distribution system according to the first embodiment, which have been described with reference to Fig. 5. Therefore, the accounting operation of the accounting system 801, which is a characteristic part in this data distribution system according to the seventh embodiment, will be explained here.

Fig. 22 is a flowchart for explaining the accounting operation of the data distribution system according to the seventh embodiment. The accounting operation shown in Fig. 22 is performed after the user has been authenticated in Step 104 of Fig. 5.
<Step 701> When the user is authenticated in Step 104 of Fig. 5, the analysis authentication unit 201 outputs to the accounting system 801 the user ID of the client A for specifying the user as an accounting target, and accordingly the accounting system 801 obtains the user ID as the accounting target.
<Step 702> The data management unit 802 specifies the amount of data corresponding to the file attached to the e-mail A, which has been entered in the storage unit, and outputs the amount of data to the accounting system 801 as the accounting information.
<Step 703> The accounting system 801 decides the amount of accounts on the basis of the user ID outputted from the analysis authentication unit 201 and the accounting information outputted from the data management unit 802.
<Step 704> After deciding the amount of accounts, the accounting system 801 subjects the client A indicated by the user ID to the accounting operation. As a specific accounting method, a method is conceivable in which a credit card number of the client A indicated by the user ID is previously obtained, and the accounts are electronically settled using the credit card number.

As described above, the data distribution system according to the seventh embodiment is provided with the data management unit 802 for outputting to the accounting system 801 the accounting information that is used to decide the amount of accounts, and the accounting system 801 for subjecting the user to the accounting operation, thereby performing the accounting with respect to the users who use this data distribution system.

In this data distribution system according to the seventh embodiment, the accounting is performed on the basis of the amount of data corresponding to the attached file that is entered in the storage unit 104. However, the amount of accounts may be decided by any method. For example, the accounting can be performed on the basis of the retention period of the attached file in the storage unit 104. Or, it is possible to decide the data amount and retention period corresponding to attached files, which are acceptable at a previously collected basic usage charge, and perform the above-mentioned accounting operation using the accounting system 801 when the amount of data or retention period of the attached files exceeds the acceptable amount or period.

Further, in this seventh embodiment, the data management unit 802 is provided, and accordingly the accounting is performed according to the retention period of the attached file, the amount of retained data, or the like. However, the accounting can be performed every time the client A accesses the data entry/display system 103. In this case, it is sufficient to only know the fact that the client A accesses the data entry/display system 103. Therefore, the data entry/display system 103 has no need to include the data management unit 801.

Further, the client A is subjected to the accounting in the seventh embodiment, while it goes without saying that the client B as a receiver of an e-mail B may be subjected to the accounting.

## Claims

1. A data distribution method including:
a first transmission step of transmitting from a transmission source to a server system an electronic mail having second electronic mail creation information including at least a receiving destination address, and user authentication information including a user ID of a transmitter, with attaching a file to the electronic mail;
an authentication step of performing user authentication in the server system, on the basis of the user ID included in the user authentication information in the transmitted electronic mail, and user IDs which are previously stored in a user information database of the server system;
an entry step of entering the attached file in a storage unit of the server system when the user has been authenticated; and
a second transmission step of creating a URL indicating an entry position of the attached file that has been entered in the storage unit, in the server system, and transmitting a second electronic mail having the URL information to the receiving destination address that is included in the second electronic mail creation information.

2. The data distribution method of Claim 1 wherein
the user authentication information that is transmitted in the first transmission step further include password information, and
in the authentication step, the user authentication is performed using the user ID information and the password information.

3. The data distribution method of Claim 1 wherein
the electronic mail that is transmitted in the first transmission step further has entry position designation information that designates an entry position of the attached file, and
in the entry step, the entry of the attached file into the storage unit in the server system is performed on the basis of the entry position designation information.

4. The data distribution method of Claim 1 wherein
the electronic mail that is transmitted in the first transmission step further has transmission date/time designation information that designates a date and time when the second electronic mail is to be transmitted from the server system, and
in the second transmission step, the transmission of the second electronic mail from the server system is performed at the date and time designated by the transmission date/time designation information.

5. The data distribution method of Claim 1 wherein
the electronic mail that is transmitted in the first transmission step further has processing instruction information that instructing to process the attached file, and
in the entry step, the attached file is entered in the storage unit of the server system after the attached file is processed on the basis of the processing instruction information.

6. The data distribution method of Claim 1 wherein
the electronic mail that is transmitted in the first transmission step further has a keyword that is entered in the storage unit together with the attached file, and
in the entry step, the keyword and the attached filed are entered in the storage unit in pairs.

7. The data distribution method of Claim 6 further including:
a third transmission step of transmitting from the transmission source to the server system an electronic mail having the second electronic mail creation information, the user authentication information, and the keyword that is used to retrieve the entered attached file;
a retrieval step of retrieving the attached file matching with the keyword, which has been entered together with the keyword in pairs, in the server system, after the user has been authenticated; and
a fourth transmission step of creating a URL indicating an entry position of the retrieved attached file, and transmitting the second electronic mail having the URL information to the receiving destination address included in the second electronic mail creation information.

8. The data distribution method of Claim 1 wherein
the electronic mail that is transmitted in the first transmission step has retention period designation information that designates a period in which the attached file is retained in the storage unit of the server system, and
a delete step is further including for deleting the attached file from the storage unit in the server system on the basis of the retention period designation information.

9. The data distribution method of Claim 1 further including:
an accounting step of subjecting a user who uses a data distribution system to an accounting operation in the server system, after the user has been authenticated.

10. The data distribution method of Claim 9 wherein
in the accounting step, an amount of accounts is calculated on the basis of an amount of data and the retention period of the attached file that has been entered in the storage unit of the server system, and then the accounting is performed to the user who uses the data distribution system.

11. A data distribution system including:
a transmission/receiving apparatus for transmitting an electronic mail having second electronic mail creation information including at least a receiving destination address, which is information for creating a second electronic mail, and user authentication information including a user ID of a transmitter, with attaching a file to the electronic mail;
a mail server for performing mailing services among plural clients;
a data entry/display system including: an analysis authentication unit for receiving the electronic mail via the mail server, and analyzing the electronic mail to perform user authentication on the basis of the user ID included in the user authentication information, and user IDs which are previously stored in a user information database that contains personal information of the users, an entry unit for entering the attached file in a storage unit that stores the attached file when the user has been authenticated, and a URL creation unit for creating a URL indicating an entry position of the attached file that has been entered in the storage unit;
a mail-with-entry-information creation unit for creating the second electronic mail on the basis of the second electronic mail creation information and the URL which are outputted from the data entry/display system, and transmitting the second electronic mail to the receiving destination address included in the second electronic mail creation information; and
a second transmission/receiving apparatus for receiving the second electronic mail, and viewing the attached file that has been entered in the storage unit of the data entry/display system on the basis of the URL that has been added to the second electronic mail.

12. The data distribution system of Claim 11 wherein
the user authentication information further includes password information, and
the analysis authentication unit of the data entry/display system performs the user authentication using the user ID information and the password information.

13. The data distribution system of Claim 11 wherein
the electronic mail further has entry position designation information that designates an entry position of the attached file, and
the entry unit of the data entry/display system enters the attached file in the storage unit on the basis of the entry position designation information.

14. The data distribution system of Claim 11 wherein
the electronic mail further has transmission date/time designation information that designates a date and time when the second electronic mail is to be transmitted, and
the data entry/display system further includes a remainder setting unit for instructing the mail-with-entry-information creation unit to transmit the second electronic mail at the date and time designated by the transmission date/time designation information.

15. The data distribution system of Claim 11 wherein
the electronic mail further has processing instruction information that instructs to process the attached file, and
the data entry/display system further includes a processing unit for processing the attached file on the basis of the processing instruction information.

16. The data distribution system of Claim 11 wherein
the electronic mail further has a keyword which is entered in the storage unit together with the attached file, and
the entry unit of the data entry/display system enters the keyword and the attached file in pairs, in the storage unit.

17. The data distribution system of Claim 16 wherein
the transmission/receiving apparatus transmits to the data entry/display system an electronic mail having the second electronic mail creation information, the user authentication information, and the keyword that is used to retrieve the entered attached file,
the data entry/display system has a keyword retrieval unit for retrieving the attached file matching with the keyword, which has been entered together with the keyword in pairs after the user has been authenticated, and
the URL creation unit of the data entry/display system creates a URL indicating an entry position of the retrieved attached file.

18. The data distribution system of Claim 11 wherein
the electronic mail further has retention period designation information that designates a retention period during which the attached file is to be retained in the storage unit of the server system, and
the data entry/display system has a time management unit for instructing the entry unit to delete the attached file from the storage unit after the retention period designated by the retention period designation information has expired.

19. The data distribution system of Claim 11 wherein
the data entry/display system has an accounting system for performing an accounting operation to the user who uses the data distribution system, after the user has been authenticated.

20. The data distribution system of Claim 19 wherein
the accounting system calculates an amount of accounts on the basis of an amount of data and a retention period of the attached file that has been entered in the storage unit of the data entry/display system, to perform the accounting to the user who uses the data distribution system.
